# EUROPEAN PATENT APPLICATION

(11) **EP 4 116 063 A1**
(43) Date of publication of application: **11.01.2023**
(21) Application number: 21020355.0
(22) Date of filing: 07.07.2021
(51) Int. Cl.: B29C 64/106, B29C 64/118, B29C 64/336, B33Y 10/00, B33Y 30/00, B33Y 70/10

(54) **METHOD FOR THE ADDITIVE MANUFACTURING OF A SHAPED BODY**

(71) Applicant: ACMIT Gmbh, 2700 Wiener Neustadt (AT)
(72) Inventor: Jaksa, Laszlo, A-1150 Vienna (AT); Lorenz, Andrea, A-2604 Theresienfeld (AT); Pahr, Dieter, A-2511 Pfaffstätten (AT)
(74) Representative: Keschmann, Marc

(57) **Abstract**

In a method for the additive manufacturing of a shaped body (2) by the site-selective layer-by-layer deposition of fused material from a nozzle (8) of a first print head (7) of a 3D-printer onto a construction platform of the 3D-printer or the shaped body to form at least one first region (3, 3a) of the shaped body, wherein the fused material is a thermoplastic material, in addition to the thermoplastic material a non-thermoplastic material is site selectively deposited in at least one layer of the thermoplastic material to form at least one second region (4, 4a, 4b) of the shaped body with different mechanical properties than the at least one first region.

## Description

The present invention relates to a method for the additive manufacturing of a shaped body, an apparatus for carrying out the inventive method as well as a shaped body produced according to the inventive method.

Methods and apparatus for additive manufacturing of shaped bodies are well known and are commonly addressed as 3D printing methods or apparatuses. In some cases of 3D printing a filament of a thermoplastic material is fused in a print head which print head can be moved independently in order to deposit layers of a 3D model of the shaped body to be produced. To this end, the 3D model is digitally transformed into a multitude of slices that represent the layers to be subsequently printed on top of each other. A first layer of the shaped body is usually printed on a construction platform of the 3D printer.

By these methods and apparatuses it is possible to manufacture shaped bodies of complex geometries. The layer-by-layer deposition of the material allows for overhanging regions in the shaped body or also cavities within the shaped body, which cannot be produced by injection moulding.

Anatomic models are important in medical education and preoperative planning, as they help students or doctors to prepare for real scenarios in a risk-free way. In recent years, several experimental anatomic models were made with various additive manufacturing techniques to improve geometric, radiological or mechanical realism. However, reproducing the mechanical behaviour of soft tissues remains a challenge.

Additive manufacturing also called 3D-printing has become an increasingly influential group of technologies in the field of anatomic models in recent years. Achieving better geometric and mechanical fidelity is possible with the combination of medical imaging technologies and additive manufacturing. In an extrusion-based technique called Fused Filament Fabrication (FFF), a thermoplastic filament is pushed into a heated extruder, and deposited through a nozzle. The extruder and the nozzle together are called print head.

This is mostly used for bone modelling and mouldmaking in the field of anatomic models. These systems can process a large variety of hard thermoplastic filaments, but are limited in their ability to handle soft materials. A large proportion of available medical image-based anatomic models are, therefore, made only of hard plastic using FFF and are therefore only of limited realism as compared to real anatomical samples and in particular real patients.

It is, hence, an object of the present invention to produce shaped bodies and in particular anatomic models with regions having different mechanical properties in order to provide anatomic models that are more realistic with regard to the different mechanical properties of various biological tissues, such as skin, muscle, tendon and nerve tissue.

To solve this object, the present invention provides for a method for the additive manufacturing of a shaped body by the site-selective layer-by-layer deposition of fused material from a nozzle of a first print head of a 3D-printer onto a construction platform of the 3D-printer or the shaped body to form at least one first region of the shaped body, wherein the fused material is a thermoplastic material and is characterized in that in addition to the thermoplastic material a non-thermoplastic material is site-selectively deposited in at least one layer of the thermoplastic material to form at least one second region of the shaped body with different mechanical properties than the at least one first region. In the context of the present invention a layer of the thermoplastic material does not necessarily need to be a coherent layer of the shaped body but can also be a region or a collection of regions of thermoplastic material in one imaginary layer of the shaped body with other regions within this very layer remaining without material deposited and second regions being formed by the non-thermoplastic material.

In the context of the present invention, the mentioned different mechanical properties pertain to properties of tensile strength, hardness, brittleness and elongation at break, In this, the mechanical properties of the first regions differ from those of the second regions by the following values:

| | **First Regions** | **Second Regions** |
|---|---|---|
| **Tensile Strength (MPa)** | 20 to 100 | 0 to 20 |
| **Hardness (Shore)** | A-70 to D-90 | 00-0 to A70 |
| **Elongation at break (%)** | 0 to 50 | 50 to 1000 |

It is to be understood that while the specific values for the mechanical properties may overlap in the above table they will differ between first and second regions at least by preferably 10% in carrying out the invention.

By combining thermoplastic material, which is usually rather rigid and non-thermoplastic material within a 3D-printed shaped body, anatomic models can be produced to more closely represent the mechanical properties of real anatomic structures so that doctors and students can study and train under more realistic circumstances. The combination of extruding thermoplastic material and depositing non-thermoplastic material to form a shaped body in 3D printing has huge time and cost advantages over methods that rely on printing different parts or regions of a shaped body separately and assembling them after printing.

According to a preferred embodiment of the present invention the non-thermoplastic material is extruded from a nozzle of a second print head of a 3D-printer. A second print head in the sense of the present invention does not have to be equipped with a heating device for fusing thermoplastic material and is thus simply an extrusion device capable of being deployed in a 3D printer. Depositing the non-thermoplastic material with a print head allows for complete integration of the printing of the second regions into a 3D printing method for the additive manufacturing of shaped bodies so that anatomic models having regions of different mechanical properties can be produced in an uninterrupted process in one 3D printer.

A large variety of thermoplastic materials can be used for forming the first regions. It is, however preferred that the thermoplastic material is chosen from the group consisting of polylactates, polyethylene, polyethylene-glycolate and acrylonitrile butadiene styrene, optionally loaded with ceramic or metal powder, carbon fiber, wood and/or concrete. For mimicking electric properties of different structures copper powder appears to be a preferred additive to thermoplastic materials. These materials have been proven to provide almost realistic properties to regions representing bone tissue and can be processed in a 3D printing method according to well-known protocols.

In order to produce softer regions on the sides or within the shaped body, the present invention is preferably carried out in such a manner that the non-thermoplastic material is chosen from the group consisting of crosslinking silicone glues, crosslinking silicone rubbers and crosslinking natural hydrogels or crosslinking synthetic hydrogels. Crosslinking silicone glues are known to be adhesive to the thermoplastic materials used in the present invention and can, therefore be used to produce regions that are mechanically connected to the surrounding regions of thermoplastic material. Also, some silicone rubbers are known that adhere to the regions of thermoplastic material. Most silicone rubbers, however, do not adhere to thermoplastic materials. Crosslinking synthetic hydrogels are preferably chosen from the group of polyvinyl alcohols, alginate, gellan gum and gelatine.

Alternatively the non-thermoplastic material is chosen from the group consisting of non-crosslinking silicone oils, non-crosslinking paints or colorants, non-crosslinking natural hydrogels or synthetic hydrogels. These non-thermoplastic materials are used in the present invention to act in the printed shaped body as mechanics-modifying inclusion and can mimic blood within blood vessels produced from another non-thermoplastic material, an abscess or the like.

Usually the non-thermoplastic materials should harden by themselves. However, when this takes place only unsatisfactorily the non-thermoplastic material, after deposition may be subjected to a curing step, preferably of drying, heating and/or irradiating by light. In the context of the present invention, "after deposition" can relate to hardening or curing after the deposition of a small droplet, a full layer, or the complete object.

In addition to only printing the various structures of the shaped body, the inventive method can be further developed such that, preferably, at least one non-printable component is inserted into at least one layer of the thermoplastic material or the non-thermoplastic material, wherein the component is chosen from the group of electronics, wiring, fibres, a sensor and an actuator. In this manner it becomes feasible to include, for example, a cardiac pacemaker into the anatomic model.

The inventive apparatus for additive manufacturing of a shaped body by the site-selective layer-by-layer deposition of material comprises at least a construction platform and at least one first print head for the deposition of fused material, where the fused material is a thermoplastic material, wherein the first print head is mounted to a moveable carriage for selectively positioning the first print head above the construction platform or the shaped body, and a feed mechanism for feeding unfused thermoplastic material to the at least one first print head, characterized in that at least one second print head for extruding a non-thermoplastic material onto the platform or the shaped body is provided, which second print head is mounted to a moveable carriage for selectively positioning the second print head above the construction platform or the shaped body and which is intermittently operable with the at least one first print head. This amounts to a filament-3D printer as it is generally well known to the person skilled in the art that is in an inventive manner equipped with print head for the extrusion of non-thermoplastic materials.

It is particularly preferred when the at least one first print head and the at least one second print head are mounted on the same moveable carriage. Commercial 3D printers sometimes offer moveable carriages with several slots for print heads so that it is possible to equip at least one of these slots with a second print head. It is to be understood that in the context of the present invention the terms "first print head" and "second print head" do not necessarily mean, that only one first and second print head is used but rather means that there can be two or more print heads of a first kind and two or more print heads of a second kind.

The shaped body according to the present invention has at least one first region of thermoplastic material and at least one second region of non-thermoplastic material and can, therefore mimic actual anatomic structures more closely than a shaped body that is only made up of thermoplastic material alone.

A preferred embodiment of the present invention is characterized in that a second region is enclosed inside a first region of the shaped body. This may be used to represent, in an anatomic model blood vessels, organs, abscesses and the like but may also serve to modify the mechanical properties of the shaped body. Also, these inclusions may mimic certain structures that can be examined by palpation and/or percussion.

Also, in addition or alternatively, the inventive shaped body can be produced in such a manner, that a first region is arranged adjacent to a second region as it is in conformity with a preferred embodiment of the present invention. This may serve to produce harder outer structures as compared to softer underlying structures, which may be the case to form anatomic models of fingers or toes with fingernails or toenails attached. Harder outer structures can also be useful during the production of the inventive shaped body to serve as a supporting structure during manufacture with the supporting structure being removed when the rest of the shaped body is finished.

Conversely, the invention may preferably devised in such a manner that a second region is arranged adjacent to a first region. This would mean that the specified anatomic model requires a softer tissue on the outside to mimic skin tissue or the like.

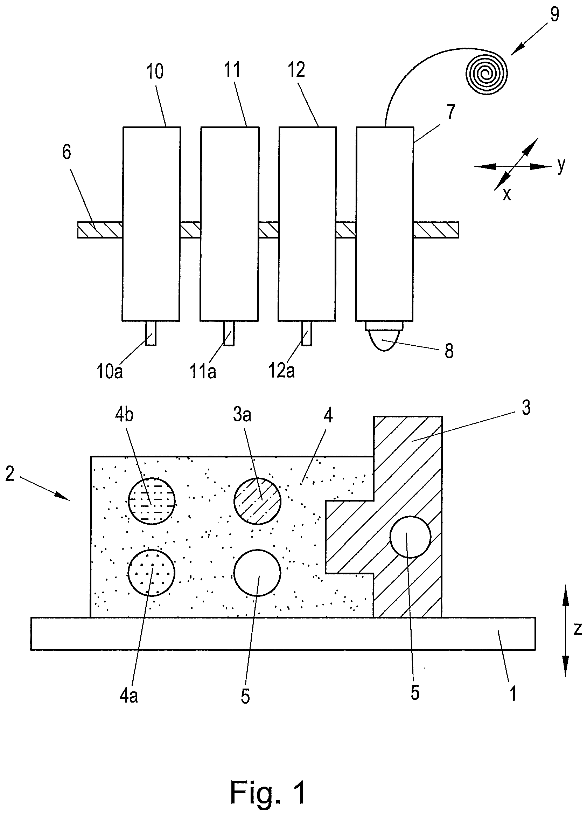

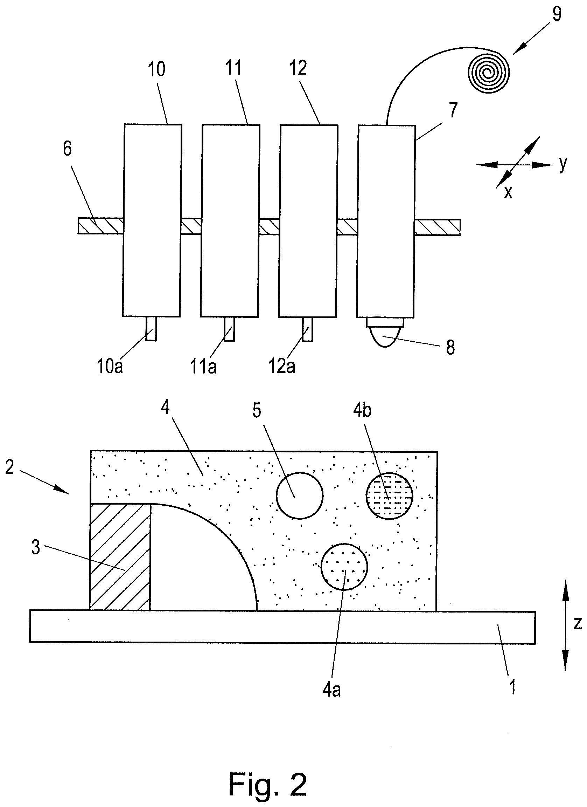

The invention will now be exemplified in more detail with regard to the accompanying drawing, in which Figures 1 and 2 show inventive shaped bodies produced in an inventive apparatus.

In Figure 1 the inventive apparatus is a 3D printer with a construction platform 1 on which a shaped body 2 is manufactured by the layer-by-layer deposition of material. The shaped body 2 has a component 3 of thermoplastic material on its outer side which forms a first region 3 within the sense of the present invention and which is situated adjacent to a second region 4 of a non-thermoplastic material which mimics soft tissue of an anatomic model. Also, a first region 3a is enclosed inside the non-thermoplastic material. The first region 3a could, for example, represent a bone within muscle tissue. A second region 4a is made of an adhesive silicone rubber and could represent an organ of an anatomic model. A second region 4b is made of a non-crosslinking hydrogel and could represent an abscess. Air inclusions are denoted by reference numerals 5. In the example of the Figures print heads are mounted to one common moveable carriage 6, which can be moved in the x-direction and the y-direction to position the print heads relative to the construction platform 1 or the shaped body 2 in order to site-selectively deposit fused material of thermoplastic material layer-by-layer to manufacture the shaped body 2. The platform 1 can be moved in the z-direction in order to make room for the movement of the moveable carriage 6 or for the shaped body 2 emerging from the construction platform 1 with every added layer.

In this example, only print head 7 is devised for extrusion of thermoplastic materials and is therefore equipped with a heated nozzle 8 to fuse thermoplastic material fed to the print head 7, for example as a filament 9 in a manner known to the person skilled in the art. Print head 10 is loaded with a non-thermoplastic material being a crosslinking adhesive silicone glue or rubber, print head 11 is loaded with a crosslinking non-adhesive silicone rubber and print head 12 is loaded with a non-crosslinking natural hydrogel. The print heads 10, 11 and 12 have means to extrude those non-thermoplastic materials through their respective nozzles 10a, 11a and 12a. During manufacture of the shaped body 2, the print heads 7, 10, 11 and 12 are positioned over the construction platform 1 or the shaped body 2 and correspondingly activated in order to site-selectively extrude the thermoplastic material or the non-thermoplastic material they contain.

In Figure 2, like structures are denoted by like reference numerals as in Figure 1. A first region 3 adjacent the second region 4 of the shaped body serves as a supporting structure for the shaped body 2 during manufacture and is removed once the shaped body has been completed.

## Claims

1. Method for the additive manufacturing of a shaped body (2) by the site-selective layer-by-layer deposition of fused material from a nozzle (8) of a first print head (7) of a 3D-printer onto a construction platform (1) of the 3D-printer or the shaped body (2) to form at least one first region (3, 3a)) of the shaped body (2), wherein the fused material is a thermoplastic material, **characterized in that** in addition to the thermoplastic material a non-thermoplastic material is site-selectively deposited in at least one layer of the thermoplastic material to form at least one second region (4, 4a, 4b) of the shaped body (2) with different mechanical properties than the at least one first region (3, 3a).

2. Method according to claim 1, **characterized in that** the non-thermoplastic material is extruded from a nozzle (10a, 11a, 12a) of a second print head (10, 11, 12) of a 3D-printer.

3. Method according to claim 1 or 2, **characterized in that** the thermoplastic material is chosen from the group consisting of polylactates, polyethylene, polyethylene-glycolate and acrylonitrile butadiene styrene, optionally loaded with ceramic or metal powder, carbon fiber, wood and/or concrete.

4. Method according to claim 1, 2 or 3, **characterized in that** the non-thermoplastic material is chosen from the group consisting of crosslinking silicone glues, crosslinking silicone rubbers and crosslinking natural hydrogels or crosslinking synthetic hydrogels.

5. Method according to claim 1 or 2, **characterized in that** the non-thermoplastic material is chosen from the group consisting of non-crosslinking silicone oils, non-crosslinking paints or colorants, non-crosslinking natural hydrogels or synthetic hydrogels.

6. Method according to one of claims 1 to 5 **characterized in that** the non-thermoplastic material, after deposition is subjected to a curing step, preferably of drying, heating and/or irradiating by light.

7. Method according to one of claims 1 to 6, **characterized in that** at least one non-printable component is inserted into at least one layer of the thermoplastic material or the non-thermoplastic material, wherein the component is chosen from the group of electronics, wiring, fibers, a sensor and an actuator.

8. Apparatus for additive manufacturing of a shaped body (2) by the site-selective layer-by-layer deposition of material comprising at least a construction platform (1) and at least one first print head (7) for the deposition of fused material, where the fused material is a thermoplastic material, wherein the first print head (7) is mounted to a moveable carriage (6) for selectively positioning the first print head (7) above the construction platform (1) or the shaped body (2), and a feed mechanism for feeding unfused thermoplastic material to the at least one first print head (7), **characterized in that** at least one second print head (10, 11, 12) for extruding a non-thermoplastic material onto the platform (1) or the shaped body (2) is provided, which second print head (10, 11, 12) is mounted to a moveable carriage (6) for selectively positioning the second print head (10, 11, 12) above the construction platform (1) or the shaped body (2) and which is intermittently operable with the at least one first print head (7) .

9. Apparatus according to claim 8, **characterized in that** the at least one first print head (7) and the at least one second print (10, 11, 12) head are mounted on the same moveable carriage (6).

10. Shaped body produced according to any one of claims 1 to 7 having at least one first region (3, 3a) of thermoplastic material and at least one second region (4, 4a, 4b) of non-thermoplastic material.

11. Shaped body according to claim 10, **characterized in that** a second region (4, 4a, 4b) is enclosed inside a first region (3, 3a) of the shaped body.

12. Shaped body according to claim 10 or 11, **characterized in that** a first region (3, 3a) is arranged adjacent to a second region (4, 4a, 4b).

13. Shaped body according to claim 10, 11 or 12, **characterized in that** a second region (4, 4a, 4b) is arranged adjacent to a first region (3, 3a).
